## Europäisches Patentamt
## European Patent Office
## Office européen des brevets

(19)

(11) Publication number: **0 007 137**
**B1**

(12)

# EUROPEAN PATENT SPECIFICATION

(45) Date of publication of patent specification: **11.05.83**

(51) Int. Cl.³: **F 16 H 47/06**

(21) Application number: **79200368.3**

(22) Date of filing: **05.07.79**

(54) Transmission provided with a variable V-belt transmission and a hydrodynamic transmission.

(30) Priority: **14.07.78 NL 7807579**

(43) Date of publication of application:
**23.01.80 Bulletin 80/2**

(45) Publication of the grant of the patent:
**11.05.83 Bulletin 83/19**

(84) Designated Contracting States:
**AT BE CH DE FR GB IT LU NL SE**

(56) References cited:
**DE - A - 1 455 757**
**DE - A - 1 936 741**
**DE - A - 2 557 243**
**FR - A - 1 385 059**
**US - A - 3 115 049**

(73) Proprietor: Van Doorne's Transmissie B.V.
Dr. Hub van Doorneweg 120
NL-5026 RA Tilburg (NL)

(72) Inventor: Van der Hardt Aberson Frederik Ernst
Carel
Tweelingenlaan 22
NL-5632 AX Eindhoven (NL)

(74) Representative: Louet Feisser, Arnold Abraham
Alfred
Postbus 500
NL-5000 AM Tilburg (NL)

Courier Press, Leamington Spa, England.

## Transmission provided with a variable V-belt transmission and a hydrodynamic transmission

The present invention relates to transmission, in particular for a motor vehicle, provided with an infinitely variable V-belt transmission having a primary and a secondary pulley, each provided with a primary resp. secondary operating cylinder for axial displacement of at least one of the conical discs, furthermore provided with a hydrodynamic transmission unit, and means for locking the hydrodynamic transmission unit.

Such a transmission is known from DE—A—2 557 243 wherein the hydrodynamic transmission unit may comprise a so-called torque converter, i.e. a transmission unit which on the one end serves as clutch for driving away and on the other end for increasing the engine torque at low vehicle speeds, so that the range of ratios of the transmission, as it were, is increased. The hydrodynamic transmission unit, however, may also consist of a so-called fluid coupling, whereby the engine torque is not increased and which only serves as take off clutch.

In order to eliminate the continuous presence of a certain speed difference between the input and the output shaft of the hydrodynamic transmission unit, which results in a loss of power, the hydrodynamic transmission unit is provided with means for locking said transmission unit.

Such a locking clutch, or lock-up, effects a direct, mechanical connection between the input and the output shaft of the hydrodynamic transmission unit, e.g. by pressing a plate clutch.

Said DE—A—2 557 243 does not disclose any means for regulation of the lock-up clutch, which clutch should be engaged during the periods in which the hydrodynamic transmission unit is not used for take off or for torque increase.

It is the object of the invention to provide a simply operable lock-up.

To this effect according to the invention, the transmission is characterized in that the means for locking up the hydrodynamic transmission unit are operable depending on the fluid pressure in the primary operating cylinder.

This enables to control through the same fluid supply valve both the transmission ratio of the variable V-belt transmission and the engagement and disengagement of the lock-up. As long as the variable V-belt transmission has the maximal transmission ratio, i.e. is in the lowest gear, the driving belt runs in the primary pulley with minimally running diameter, whereby the conical discs have their maximal interspace and are pushed against stops by the tensile stress in the V-belt. Up to the valve at which the V-belt transmission is going to shift up, the fluid pressure in the primary cylinder may be varied thereby without consequence, which fluid pressure variation may be used for operating the lock-up. As long as the variable V-belt transmission is in a higher gear, there is always sufficient fluid pressure in the primary cylinder to keep the lock-up closed.

By thus using the fluid pressure in the primary operating cylinder also for operating the locking of the hydrodynamic transmission unit, there is achieved a simple construction, whereby either the torque convertor, resp. fluid coupling functions as such and the variable transmission is in the lowest gear, or the torque converter, resp. fluid coupling is out of function (locked) and the variable transmission influences the transmission ratio of the transmission. The same fluid supply and discharge valve may thereby control the transmission ratio of the V-belt as well as operate the lock-up.

Preferably, the lock-up comprises a wet plate clutch, i.e. in fluid acting surfaces pressible against each other, which is operable by means of a hydraulic pressure cylinder being in direct contact with the primary operating cylinder. Naturally, the mechanical locking of the hydrodynamic transmission unit may furthermore comprise a vibration damper in order to counter-act the transmission of torsional vibrations.

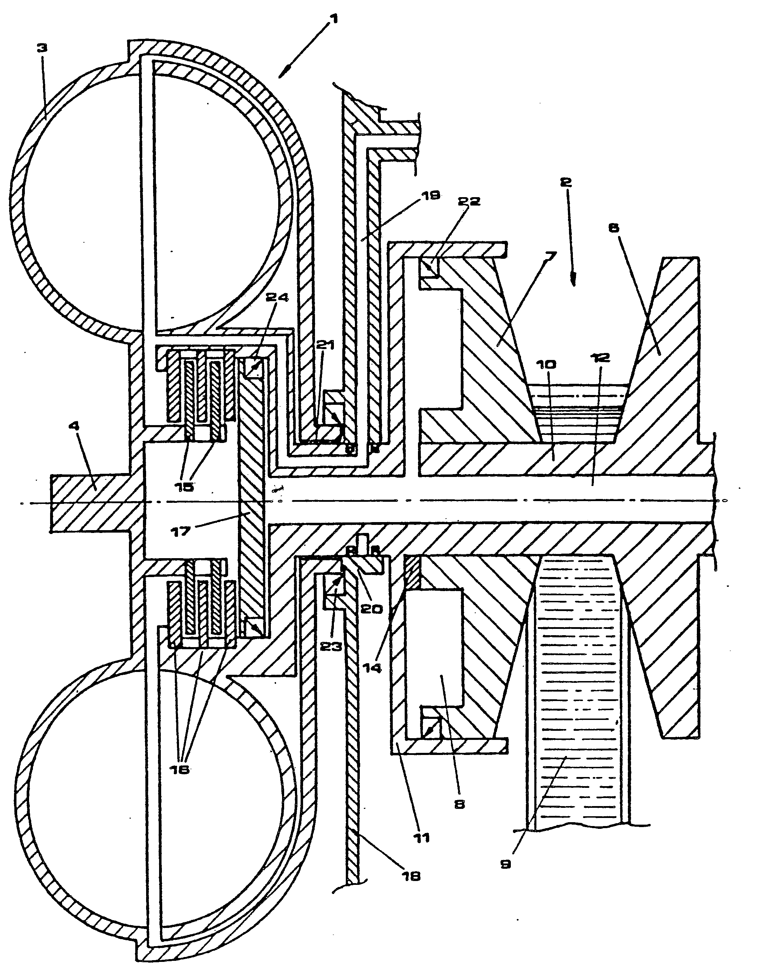

One embodiment of the transmission according to the invention will now be described, by way of example, with reference to the accompanying drawing. The drawing diagrammatically shows a part of the transmission, viz. a fluid coupling 1 and the primary pulley 2. The fluid coupling 1 comprises a pump impeller 3 which via input shaft 4 is driven by an engine, not shown, and a turbine impeller, which is directly connected to the primary pulley 2 of the variable transmission. Only primary pulley 2, and a part of V-belt 9 is diagrammatically shown. Primary pulley 2 comprises a conical disc 6 fixedly connected to primary shaft 10, and a conical disc 7 axially movable over primary shaft 10. The running diameter of the V-belt 9 in the primary pulley 2 is defined by the interspace of the discs 6 and 7. With the maximal interspace shown in the drawing, V-belt 9 lies with a minimal running diameter in pulley 2. Through the tensile stress in V-belt 9 the conical disc 7 is urged against the stop 14 connected to the primary shaft 10. Disc 7 functions as piston in the operating cylinder 11, which is fixedly connected to the primary shaft 10 and by which a cylinder space 8 is enclosed. By fluid supply and discharge to and from cylinder space 8, via a coaxial fluid conduit 12 in primary shaft 10, the interspace between the discs 6, 7 may be varied, resulting in a change of the running diameter of V-belt 9 in the primary pulley 2.

Thereby an equilibrium may be adjusted between the fluid pressure in cylinder space 8 and the tensile stress in V-belt 9. Such a control is described in detail in Dutch patent application 7601286.

The transmission ratio of the variable V-belt transmission is consequently adjusted by fluid supply and discharge to and from cylinder space 8, while the fluid pressure should always be sufficiently large to achieve an equilibrium condition with the tensile stress in the V-belt.

According to the invention the transmission is furthermore provided with a plate clutch having plates 15 fixedly connected to the input shaft 4 and plates 16 affixed to the primary shaft 10. Depending on the fluid pressure in conduit 12, piston 17 presses the plates 15 and 16 against each other, so that a direct, mechanical connection is realized between shafts 4 and 10. Thus the hydrodynamical transmission unit 1 can be locked, viz. depending on the fluid pressure prevailing in cylinder space 8.

By means of the construction shown in the drawing, it is possible, depending on the fluid pressure in conduit 12 (and cylinder space 8), to operate the lock-up 15, 16, 17, and to adjust the transmission ratio of the V-belt transmission. Thereby the locking of the lock-up takes place at a fluid pressure that is insufficient to displace the disc 7 against the tensile stress of V-belt 9 away from stop 14, while during displacement of disc 7 always such a large fluid pressure is present that the lock-up remains closed.

The drawing furthermore shows a part of a stationary wall 18 which separates the coupling unit of the transmission from the V-belt transmission. In said wall 18 there is accommodated a fluid conduit 19 for supplying fluid to the hydrodynamic fluid coupling 1. Moreover, a bore 20 is disposed for discharging fluid leaking via bearing 21. The fluid pressure prevailing in fluid coupling 1 ensures the release of the plate clutch 15, 16, 17, so that no additional provisions are required therefor.

As shown in the drawing, the transmission is furthermore provided with seals 22, 23 and 24 for counter-acting fluid leakage in the places in question.

Furthermore, restrictions may be optionally applied in the fluid lines which are not shown in the drawing.

The drawing only shows a diagrammatic picture of one embodiment; it will be clear that the combined operation of the lock-up and the V-belt transmission is possible accordingly in many other constructions.

## Claims

1. A transmission, in particular for a motor vehicle, provided with an infinitely variable V-belt transmission having a primary (2) and a secondary pulley, each provided with a primary (8), resp. secondary operating cylinder for the axial displacement of at least one (7) of the conical discs (6, 7), furthermore provided with a hydrodynamic transmission unit (1), and means (15, 16, 17) for locking the hydrodynamic transmission unit (1) characterized in that the means (15, 16, 17) for locking up the hydrodynamic transmission unit are operable depending on the fluid pressure in the primary operating cylinder (8).

2. A transmission according to claim 1, characterized in that the means (15, 16, 17) for locking the hydrodynamic transmission unit comprise a wet plate clutch (15, 16) which is operable by means of a hydraulic pressure piston (17) which is in direct hydraulic contact with the primary operating cylinder (8).

3. A transmission according to claim 1, characterized in that the fluid pressure in the primary operating cylinder (8) is supplied to an operating cylinder of the lock up through a pressure reducing valve, to avoid too high fluid pressure in the operating cylinder of the lock-up.

## Patentansprüche

1. Getriebe, insbesondere für ein Kraftfahrzeug, mit einem stufenlos verstellbaren Keilriemengetriebe, das eine Primär- (2) und eine Sekundärriemenscheibe hat, deren jede mit einem primären (8) bzw. sekundären Arbeitszylinder für die axiale Verschiebung wenigstens einer (7) der konischen Scheiben (6, 7) versehen ist, und mit einer Strömungsgetriebe- oder -kupplungseinheit (1) sowie Mitteln (15, 16, 17) zum Verblocken der Strömungsgetriebe- oder -kupplungseinheit (1), dadurch gekennzeichnet, dass die Mittel (15, 16, 17) zum Verblocken der Strömungsgetriebe- oder -kupplungseinheit in Abhängigkeit vom Flüssigkeitsdruck in primären Arbeitszylinder (8) betätigbar sind.

2. Getriebe nach Anspruch 1, dadurch gekennzeichnet, dass die Mittel (15, 16, 17) zum Verblocken der Strömungsgetriebe- oder -kupplungseinheit eine Lamellen- bzw. Scheibennasskupplung (15, 16) aufweisen, die mittels eines hydraulischen Druckkolbens (17) betätigbar ist, der in direkter hydraulischer Verbindung mit dem primären Arbeitszylinder (8) steht.

3. Getriebe nach Anspruch 1, dadurch gekennzeichnet, dass der Flüssigkeitsdruck im primären Arbeitszylinder (8) einem Arbeitszylinder der Verblockungsvorrichtung durch ein Druckreduzierventil zugeführt wird, um einen zu hohen Flüssigkeitsdruck im Arbeitszylinder der Verblockungsvorrichtung zu vermeiden.

## Revendications

1. Transmission, notamment pour un véhicule à moteur, qui est munie d'une transmission à courroie en V pouvant varier de façon infinie et possédant des poulies principale (2) et secondaire, qui sont chacune munies d'un cylindre de commande principal (8) et respectivement secondaire pour le déplacement axial d'au moins un (7) des disques coniques (6, 7), et qui est en outre munie d'une unité de transmission hydrodynamique (1) et de moyens (15, 16, 17) pour verrouiller l'unité de transmission hydrodynamique (1), caractérisée en ce que les moyens (15, 16, 17) pour verrouiller l'unité de transmission hydrodynamique peuvent être actionnés en fonction de la pression de fluide dans le cylindre de commande principal.

2. Transmission suivant la revendication 1, caractérisée en ce que les moyens (15, 16, 17) pour verrouiller l'unité de transmission hydrodynamique comportent un embrayage à disques du type humide (15, 16) qui peut être commandé au moyen d'un piston de pression hydraulique (17) qui est en contact hydraulique direct avec le cylindre de commande principal (8).

3. Transmission suivant la revendication 1, caractérisée en ce que la pression de fluide dans le cylindre de commande principal (8) est fournie à un cylindre de commande de verrouillage par l'intermédiaire d'une soupape réductrice de pression, pour éviter une pression de fluide trop importante dans le cylindre de commande du verrouillage.